# EUROPEAN PATENT SPECIFICATION

(11) **EP 0 443 872 B1**
(45) Date of publication and mention of the grant of the patent: **03.01.1996**
(21) Application number: 91301439.5
(22) Date of filing: 22.02.1991
(51) Int. Cl.: B41J 2/05

(54) **Image communication system**
Bildübertragungsvorrichtung
Système de transmission d'images

(30) Priority: 23.02.1990 JP 41059/90
(43) Date of publication of application: 28.08.1991
(73) Proprietor: CANON KABUSHIKI KAISHA, Tokyo (JP)
(72) Inventor: Ejiri, Seishi, Canon Kabushiki Kaisha, Ohta-ku, Tokyo (JP); Shinada, Yasuyuki, Canon Kabushiki Kaisha, Ohta-ku, Tokyo (JP)
(74) Representative: Beresford, Keith Denis Lewis

(56) References cited:
- EP-A- 0 269 585
- EP-A- 0 294 793
- US-A- 2 454 247
- US-A- 4 561 789
- US-A- 4 760 462
- PATENT ABSTRACTS OF JAPAN vol. 6, no. 36 (M-115) 5 March 1982,& JP-A-56 151578 (YOSHIMASA) 24 November 1981,
- PATENT ABSTRACTS OF JAPAN vol. 5, no. 133 (E-071) 25 August 1981,& JP-A-56 068061 (HISASHI) 8 June 1981,
- PATENT ABSTRACTS OF JAPAN vol. 7, no. 72 (E-166)(1217) 25 March 1983,& JP-A-57 212866 (YASUMI) 27 December 1982,
- PATENT ABSTRACTS OF JAPAN vol. 14, no. 42 (M-925) 25 January 1990,& JP-A-1272480 (TOSHIYUKI) 31 October 1989,

## Description

The present invention relates to a facsimile system or other image communication system, more particularly the present invention relates to an image communication system having an ink jet printer with multiple ink outlets.

Recently as disclosed in, for example, EP-A-0294793 or US-A-4463359 an jet printer has been developed in which heat energy is used to generate bubbles to discharge ink from outlets of the ink jet printer onto a recording material to record characters or images. In such a printer, the heating resistors (heaters) provided within the ink outlets or orifices are much smaller than the piezoelectric elements used in prior ink jet printers. Thus, a high density of multiple outlets can be provided. This enables recording of high definition images and allows high speed and low noise recording.

There is a demand for a facsimile system which can transmit images at high speed and receive high definition images at high speed. Because of the above-mentioned features, a bubble jet ink jet printer can meet these requirements. A facsimile system having such an ink jet printer has been proposed in US-A-4463359.

EP-A-0294793 discloses an ink jet printer which discharges relatively low viscosity liquid ink and fuses the ink droplets onto a recording sheet to record information. The ink must be well-fused onto the paper. However, ink does not naturally fuse onto paper. If the sheet transport path is not extended to ensure a sufficient time for fusion, the printed portion stains other portions of the sheet when rubbed. This causes a deterioration in image quality. The requirement for a long fusing time is a big obstacle to the designing of a more compact printer which can output multiple sheets at high speed.

One way to facilitate fusion of the ink is to apply heat or warm air to a printed sheet.

However, even if a fusing unit for applying heat to fuse the ink is provided within the built-in ink jet printer of a facsimile system, it takes some time from energising of the fusing unit for the fusing unit to reach its correct operational temperature. This time varies with the quality of the paper or the ambient temperature. If the fusing unit receives image data before the fusing temperature is reached, ink stains or smudges may be formed on the recorded medium.

The present invention attempts to solve the aforesaid problem.

Accordingly, the present invention provides an image communication system according to claim 1.

The present invention can provide an innovative image communication system which enables excellent received images to be formed without ink staining and which does not cause an increase in the communication time but does enable excellently fused received images to be formed.

An embodiment of the present invention provides an image communication system in which a fusing means for applying heat to fuse ink supplied to a recording material by an ink jet recording apparatus is actuated upon receipt of a calling signal.

An embodiment of the present invention provides an image communication system which receives image data after a heat fusing means has reached a given temperature.

In an embodiment of the invention, the image communication system outputs an alarm signal if the required fusing temperature is not reached within a certain time after actuation of the heat fusing means. This prevents unnecessary data transmission and enables rapid maintenance.

In order that the invention may be more readily understood, embodiments will now be described, by way of example, with reference to the accompanying drawings described below.

### BRIEF DESCRIPTION OF THE DRAWINGS

Figure 1 is a block diagram showing the basic configuration of an embodiment of the invention.

Figure 2 is a perspective view showing an embodiment of an bubble-jet type ink jet cartridge to which the invention can apply.

Figure 3 shows a cross section of the internal configuration of a facsimile system embodying the invention.

Figure 4 is a block diagram showing an example of a circuit configuration for a facsimile system embodying the invention.

Figure 5 is a timing chart showing the operation timing for the first embodiment of the invention.

Figure 6 is a flowchart showing the control operation for the first embodiment of the invention.

Figure 7A and 7B are timing charts showing the operation timings for the second embodiment of the invention.

Figure 8 is a flowchart showing the control operation of the second embodiment of the invention.

Figure 9 is a perspective view of the schematic configuration of a full-length type ink jet recording apparatus for other embodiment of the invention.

Figure 10 is a perspective view of the recording head in Figure 9.

### DETAILED DESCRIPTION OF PREFERRED EMBODIMENTS

Embodiments of the invention are detailed below in conjunction with the drawings.

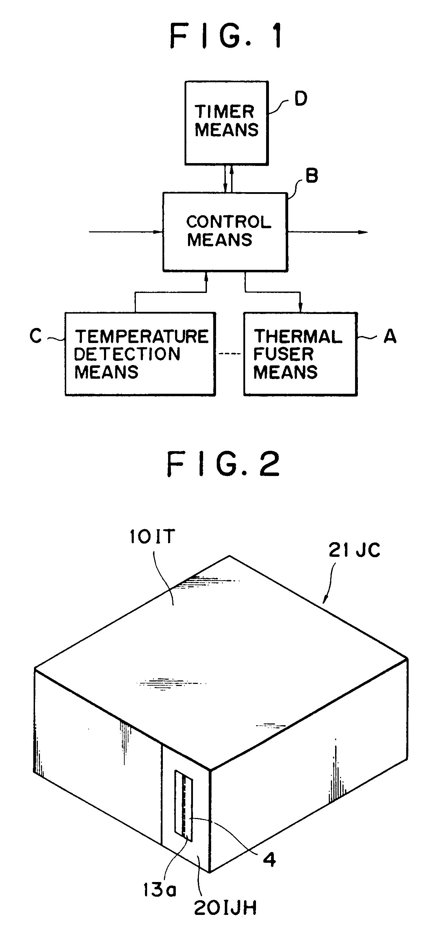

Figure 1 is a block diagram showing the basic concept for an embodiment of the invention. A represents a heat fusing means which is installed in a facsimile system including an ink jet recording apparatus as a recorder and uses heat to fuse ink on a recorded material (generally, paper) recorded by the ink jet recording apparatus. B is a control means which actuates the heat fusing means A with reception of a call signal.

C is a temperature detecting means which detects the temperature of the heat fusing means A. D is a counting means which counts a given time when the heat fusing means is actuated.

The control means B starts receiving image data when the detected value of the temperature detecting means C has reached a given fusing temperature. If the detected value of the temperature detecting means C does not reach the given fusing temperature before the counting means D finishes counting a certain time, the control means B releases the circuit and outputs an error alarm.

### Example of a configuration of a recorder (printer)

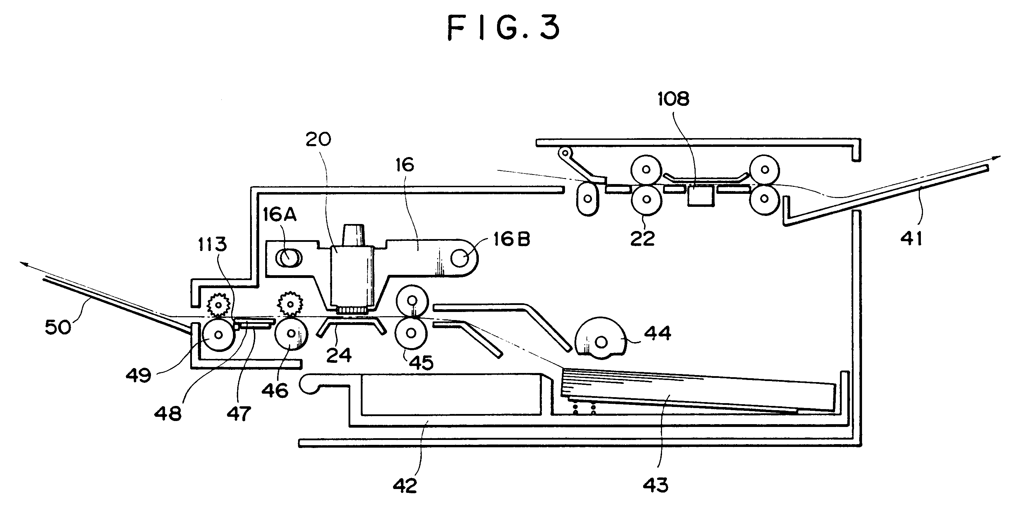

Figure 2 and 3 show an example of a configuration of an ink jet printer or an optimal recorder for a facsimile system in which the invention is implemented. In Figures 2 and 3, 20 is an ink jet head (recording head) which uses bubbles generated with heat energy to discharge ink onto a recording sheet. 21 is an ink jet cartridge (IJC) which is freely detachable and equipped with a tank 10IT which is united with the ink jet head (IJH) and supplies ink to the ink jet head (IJH). IJRA represents the main unit of an ink jet recording apparatus.

In this embodiment, the ink jet cartridge 21 is shaped, as seen in the perspective view of Figure 2, in such a way that the distal portion of the ink jet head 20 is slightly protruding from the front surface of the ink tank 10. The ink jet head cartridge 21 is fixed to a carriage placed on the main unit of the ink jet recording apparatus IJRA which will be described later. The disposable ink jet head cartridge 21 is detachable from the carriage.

The first ink tank 10 contains ink to be supplied to the ink jet head 20 and comprises an ink absorber, a container used to insert the ink absorber, and a cover member for sealing the container (not illustrated). The ink tank is filled with ink and supplies ink to the ink jet head when ink is discharged.

In this embodiment, a front plate 4 is made of a resin such as polysulfone, polyether sulfone, polyphenylene oxide and polypropylene, which are excellent in ink resistance.

The ink jet cartridge 21 having the aforesaid configuration is mounted on the carriage HC of the ink jet recording apparatus IJRA according to the procedure described below, and is freely detachable. With a given recording signal provided, the relative movements of the carriage HC and a recorded material are controlled to form a required recording image.

Figure 3 shows a cross section of the mechanical configuration of a facsimile system related to an embodiment of the invention. 108 represents a close-contact image sensor, which reads an original transported to a given position by feed rollers 22, then converts the information into electric signals. The converted electric signals are processed and transmitted as described later. 41 is an original tray for storing originals.

42 represents a recording sheet cassette for storing recording sheets (43). The recording sheets are supplied one by one by a separation roller 44, then sent to a platen 24 or a recording position by feed rollers 45.

20 represents, as shown Figure 2, an ink jet head (recording head) of an ink jet head cartridge IJC, which is equipped with a group of nozzles 13a which discharge ink from the opposite side of the recording face of a recording sheet fed onto the platen 24. 16 is a carriage HC for supporting the recording head 20. The carriage 16 is slidably mounted on two mutually parallel guide shafts 16A and 16B. The driving force of a drive motor (not illustrated) is transmitted via a belt (not illustrated). Then, the recording head 20 reciprocates over the entire width of a recording sheet, discharges ink onto the recording sheet to produce an image corresponding to received image data.

At one end of the moving path of the recording head 20, or a position opposed to a home position, a head restoration unit (not illustrated) is installed. The head restoration unit is actuated to cap the recording head 20. According to the portion of the recording head 20 capped by the capping portion of the head restoration unit, an absorbing means incorporated in the head restoration unit (for example, an absorption pump) absorbs ink or a pressing means incorporated in the ink supply path supplies ink to the recording head 20 using pressure. Thus, ink is discharged forcibly from orifices so that ink with increased viscosity inside of the orifices can be removed. This restores a discharge capacity. This discharge restoration is performed when the power supply is turned ON, the recording head is replaced, or a recording operation is not done for more than a given time. The capping operation performed at the end of recording protects the recording heads.

A recorded sheet which has undergone the aforesaid recording operation is sent to a position of a fusing heat plate 48 whose temperature is raised to a given fusing temperature by a heating element (heater) 47, and applied ink is rapidly fused onto the sheet with heat of the fusing heat plate 48. The recording sheet which has undergone a fusing operation is discharged onto a discharge tray 50 by discharge roller 49. Needless to say, a fusing unit can be formed in the same manner even in a facsimile system using rolled paper. 113 is a sensor for detecting the temperature of the heat fusing plate 48.

Thus, a heat plate is used as a fusing unit instead of a roller. Therefore, a recording sheet which has not been fused can be fused in a non-contact state. This prevents distortion of a recording image or ink stains.

### Example of a configuration of a controller

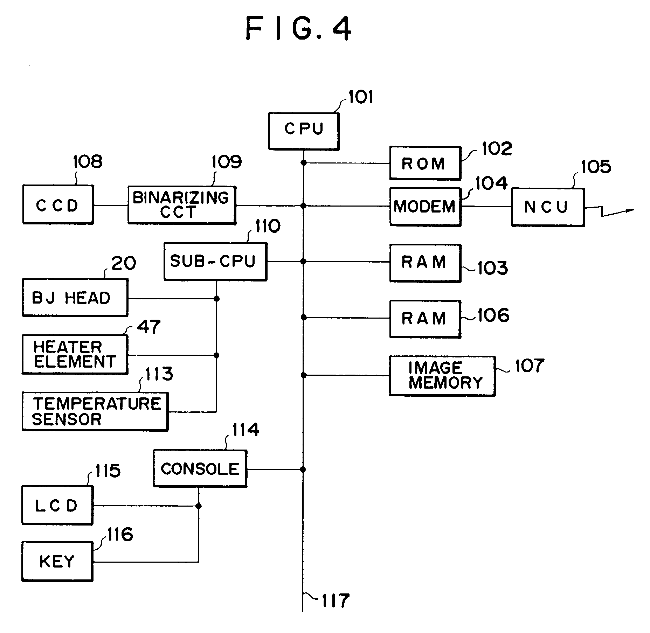

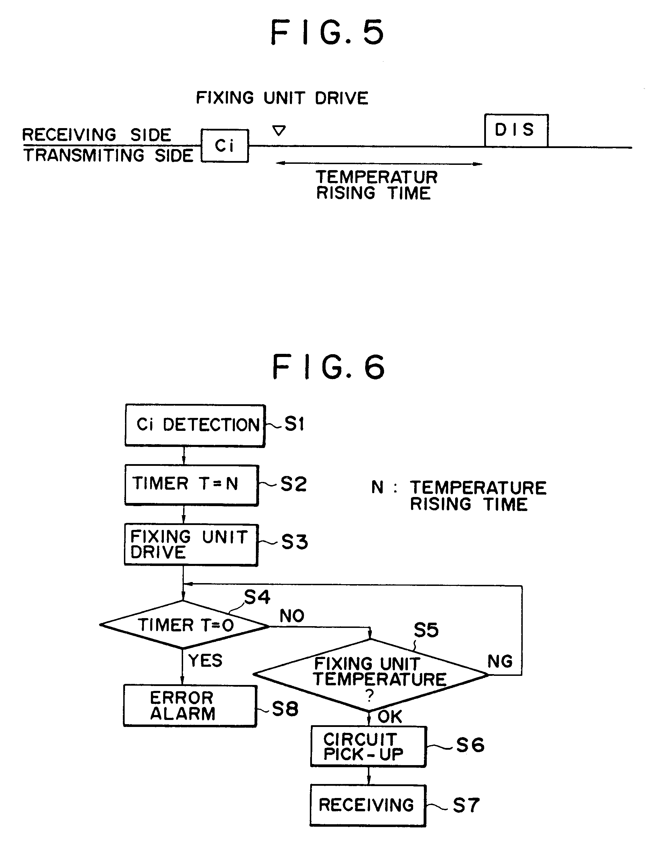

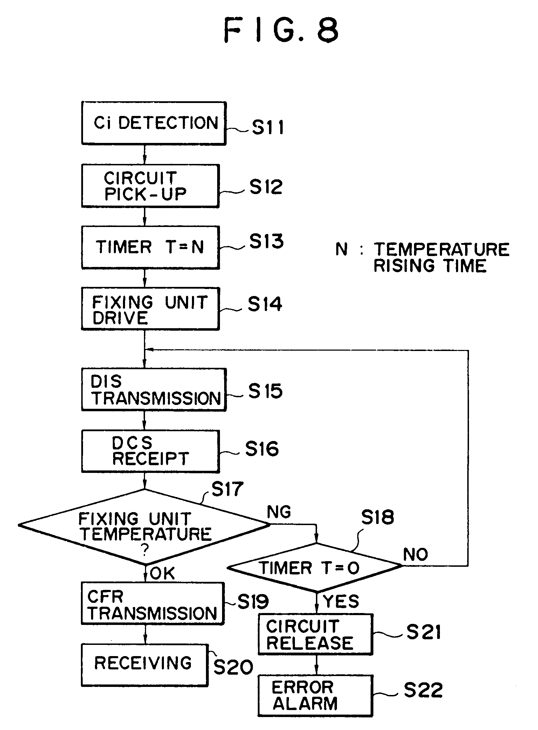

Figure 4 shows an example of a circuit configuration for a facsimile system embodying the invention. In Figure 4, 101 represents a main CPU or central processing unit including a microcomputer which controls the entire system to transmit or receive data via a bus 117. 102 is a read only memory (ROM) incorporated in the CPU 101 which contains the contents of various control procedures (programs) as shown in Figures 6 and 8. 103 is a work random access memory (RAM) the CPU 101 uses for a job related to a counter or a register. 104 is a modulator-demodulator (modem) for data transmission, and 105, a network contol unit (NCU) to be connected to the modem 104. 106 is a registration RAM to be connected to a public telephone line via the NCU 104, wherein telephone numbers and abbreviations are registered. 107 is an image RAM (DRAM) which temporarily stores image data.

108 is a charge coupled device (CCD) serving as an imaging means in an original reader, which converts an original image formed through a rod lens or other image formation lens into electric signals. 109 is a binary coding circuit which binary-codes output signals of the CCD 108.

20 is a recording head in a recorder. An ink jet recording apparatus of the type shown in Figures 2 and 3 is used as the recorder in this embodiment. 110 is a sub CPU which controls a bubble jet head (BJ head) 20 in the recorder, a heating element 47, drive motors 17 to 22, and a temperature sensor 113 according to a control signal sent from the CPU 101. The sub CPU 110 incorporates a ROM which contains control programs for image recording.

114 is a console having a keyboard. On the operator panel, a liquid crystal display (LCD) 115 and various keys 116 are arranged.

### Control operation in the first embodiment

Next, the control operation in the first embodiment of the invention is described using the timing chart of Figure 5 and the flowchart of Figure 6.

In this embodiment, as shown in Figure 6, when reception of a call signal (Ci signal with 16 Hz) is detected, a given control signal is transmitted to CPU 110 so as to actuate a heating element 47 of a fusing unit (to start energizing and heating the element). A response signal or a digital identification (DIS)) signal which serves to transmit the functions of a local system to a remote system is not transmitted until a signal indicating at the temperature of the fusing heat plate 48 in the fusing unit has reached a given fusing temperature is received from the CPU 110.

The embodiment is further detailed below. As shown in Figure 6, when a Ci signal is detected (step S1), an internal timer T is set to a given permissible temperature rising time (or rising time) N (for example; 10 to 15 seconds). The internal timer T starts counting the time in decrements (step S2). Then, a heating element 47 in a fusing unit (step S3) is energized.

Then, if the detected value of a temperature sensor 113 provided to a fusing heat plate 48 in the fusing unit reaches a given fusing temperature (step S5) before the timer T value comes to 0 (step S4), a circuit is picked up to transmit a DIS signal, then a normal receive operation starts (steps S6 and S7). This enables reception and recording of image data.

On the other hand, if the timer T value comes to 0 with the detected value of the temperature sensor 113 unreached the given fusing temperature (step S4), it is recognized as a fusing unit failure. An error alarm indicating that an error occurs in the fusing unit is output to a display 115 on a console 114. At the same time, the circuit is released to suspend the receive operation (step S8). At this time, it would be preferred that a buzzer sounds an alarm or that a receiving side transmits a signal indicating the occurrence of an error to a transmitting side. Alternatively, a given lamp may be blinked instead of displaying an error message.

According to this embodiment, the rising time for a heat fusing unit can be ensured. At the start of printing, the temperature of the heat fusing unit has already risen to a sufficient temperature for fusing. This eliminates ink stains due to a fusing failure. In addition, an error in the fusing unit can be surely informed.

When determining an N value to be set in the timer T at the step S2, consideration must be taken into a time for defining a DIS signal, a time permitted for an error check when Paper Out is detected, a time required for raising a low temperature in winter.

### Control operation of the second embodiment

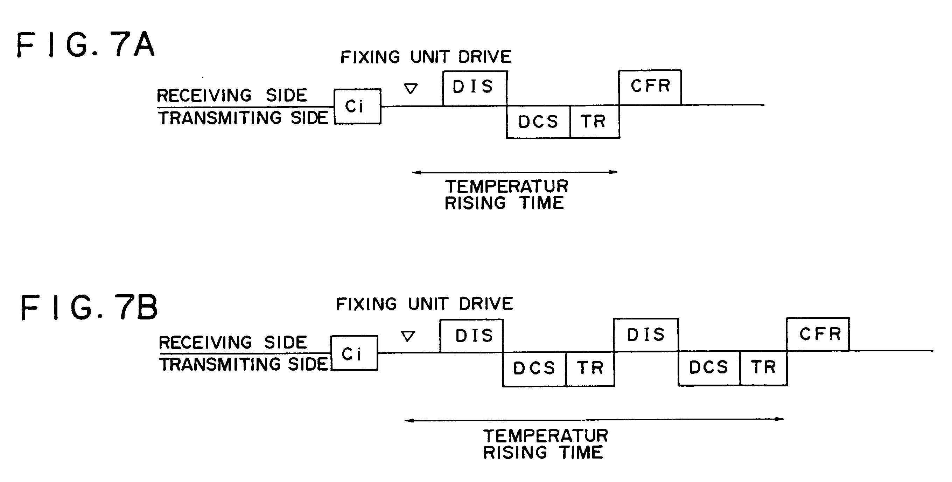

Figures 7A and 7B show the control operation of the second embodiment of the invention.

In this embodiment, as shown in the timing charts of Figures 7A and 7B, a fusing unit is actuated with detection of an automatically-received call signal (Ci signal with 16 Hz) in the same manner as that for the first embodiment. A DIS signal or a response signal (which selects a communicative mode based on the contents of DIS and instructs reception) is transmitted according to a digital instruction (DCS) signal even while the temperature of the fusing unit is rising. When the rising completes, a reception ready verification (CFR) signal is transmitted to start a normal receive operation. TR represents a training signal to be trasmitted from a transmitting side after the DCS signal. Figure 7A is a timing chart for a short rising time in summer, and Figure 7B, that for a long rising time in winter.

This embodiment is further detailed below. As shown in the flowchart of Figure 8, when a Ci signal is detected, a circuit is fetched (steps S11 and S12) and an internal timer T is set to a given permissible temperature rising time (or rising time) N. Then, the internal timer T starts counting in decrements (step S13). After that, a heating element 47 in the fusing unit is actuated (step S14).

Next, a DIS signal is transmitted (step S15). With a DCS signal received (step S16), it is checked if the detected value of a temperature sensor in the fusing unit has reached a given fusing temperature (step S17). If the given fusing temperature has not been attained, it is checked if the timer T value comes to 0 (step S18). If the decision is made in the negative, control is returned to the step S15 and the operation is repeated.

After that, if the temperature of a fusing heat plate 48 in the fusing unit has reached the given temperature (step S17) before the timer T value comes to 0, a CFR signal indicating that image signal reception is ready is transmitted (step S19) to start a normal receive operation (step S20). This enables reception and recording of image data.

On the other hand, if the timer T value comes to 0 with the detected value of the temperature sensor 113 unreached the given fusing temperature (step S18), the circuit is released (step S21) and an error alarm signal indicating that an error occurs in the fusing unit is output to a display 115 on a console 114 (step S22). At this time, in the same way as that for the first embodiment, it is preferable that a buzzer sounds an alarm or that a receiving side transmits a signal indicating the occurrence of an error to a transmitting side.

The second embodiment ensures an extra time, because the temperature of a fusing unit need not be raised until an image signal reaches.

A heat fusing unit may be actuated with reception of a Ci signal, and receive operation may be started in a sufficient given time. Thereby, the objects of the invention will be achieved anyhow. However, in this case, the receive operation start time may be delayed unnecessarily. This is not preferable from the viewpoint of a quick reception. If the heat fusing unit malfunctions, a recording failure may occur.

### Other embodiments

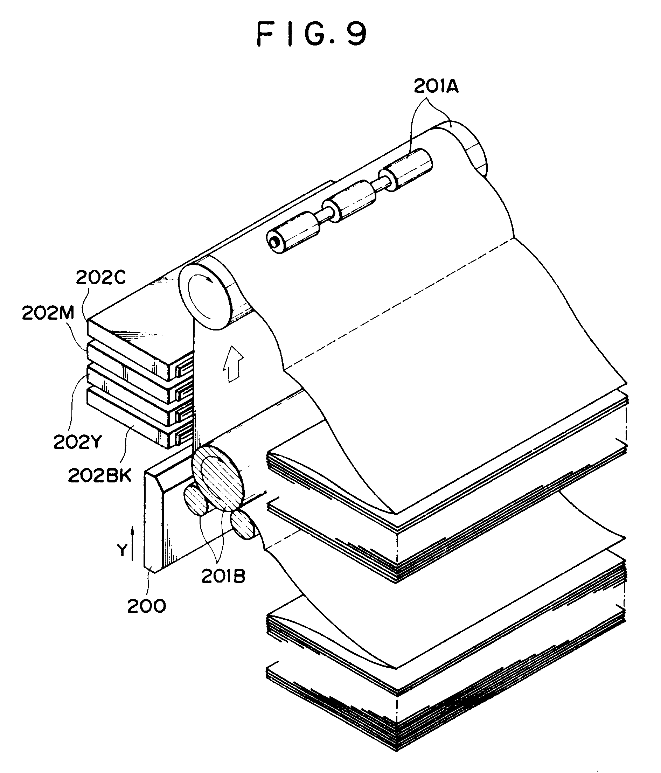

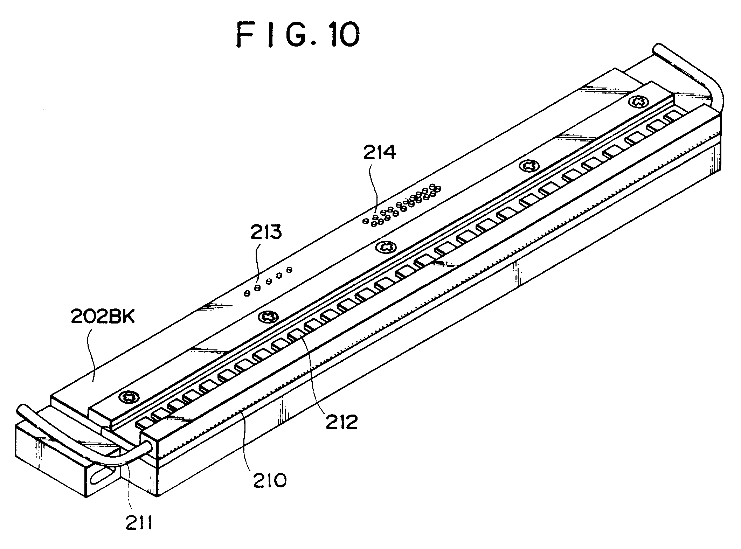

The present invention is applicable not only to a serial printer mentioned above but also to a facsimile system equipped with an ink jet recording apparatus having a full-length type recording head which has a width equivalent to that of a maximum recording medium on which a recording unit can record data as shown in Figures 9 and 10.

In Figure 9, 201A and 201B are a pair of rollers installed for carrying a recording medium R in arrow-marked sub-scanning direction Vs. 202BK, 202Y, 202M, and 202C are fully multipurpose type recording heads for recording the colors of black, yellow, magenta, and cyan, whose nozzles are arranged over the whole width of the recording medium R. The recording heads 202BK, 202Y, 202M, and 202C are arranged in that order from the upstream in recording medium transporting direction.

200 is a restoration mechanism, which substitutes for the recording medium R and are opposed to the recording heads 202B to 202C during restoration of ink discharge (a discharge restore operation). In this embodiment, preheating is done at a proper timing, and thereby the number of discharge restore operations activated can be diminished remarkably.

Figures 9 and 10 show an appearance of the recording heads 202BK to 202C. In Figure 11, 210 is ink orifices, and 211, an ink supply tube. 212 represents multiple IC circuits (drive circuits) for driving electric heat conversion elements. 213 and 214 are terminals.

Even when the invention applies to a facsimile system having the foregoing full length type printer, the control procedures shown in Figures 6 and 8 can be adopted.

The invention is also applicable to a facsimile system having a recorder of a piezoelectric type ink jet recording apparatus which uses a piezoelectric element as an ink discharge energy source.

### (Others)

The present invention brings about excellent effects when implimented in a recording head or recording apparatus, especially, of a bubble jet method among all the ink jet recording methods. The bubble jet method permits high-density and high-definition recording.

As for the typical configuration and principle, the fundamental principles disclosed, for instance, in the sepcifications of U.S. Patent Nos. 4723129 and 4740796 may be preferred. This method is applicable to both the on-demand and continuous type systems. In particular, for the on-demand type system, at least one drive signal which causes a rapid temperature rise exceeding nuclear boiling in accordance with recording information is applied to electric heat conversion elements arranged on the opposite side of a sheet or liquid path retaining liquid ink. Thereby, the electric heat conversion elements generate heat energy. Then, a heat action surface of a recording head causes screen boiling. As a result, bubbles are created in liquid ink in one-to-one correspondence with the drive signals. With the growth and contraction of the bubbles, liquid ink is discharged via discharge orifices. Then, at least one droplet is formed. Assuming that the drive signal has a pulse waveform, the bubbles grow and contract at regular intervals. Liquid ink can be discharged precisely in response to the drive signal. For this purpose, the drive signal of a pulse waveform described in the specification of U.S. Patent No. 4463359 or No. 4345262 would be suitable. If the conditions written in the specification of U.S. Patent No. 4313124 related to the temperature rise rate of the thermal action surface are met, more excellent recording can be done.

As for the configuration of a recording head, orifices, a liquid path, and electric heat conversion elements (linear liquid path or perpendicular liquid path) may be combined as disclosed in the aforesaid specifications. In addition, the configuration disclosed in U.s. Patent No. 4558333 in which a thernal action unit is arranged in bending area, or that written in U.S. Patent No. 4459600 is included in the invention. Furthermore, the invention will prove effective when implemented in the configuration disclosed in Japanese Patent Application Laid-open No. 59-123670 in which a shared slit is arranged as an orifice for multiple electric heat conversion elements, or that disclosed in Japanese Patent Application Laid-open No. 59-138461 in which an orifice for absorbing pressure waves of heat energy is opposed to a discharge unit. That is to say, the recording head can assume any shape.

As described previously, the invention is effectively applicable to a full-length type recording head having a length covering the maximum width of a recording medium on which a recording unit can record data.

Such a recording head may have a configuration in which multiple recording heads are combined to cover the length or multiple recording head are united as a single recording head. Moreover, the invention will prove effective when implemented in a chip type recording head among the aforesaid serial type recording heads which can be electrically connected to the main unit of a system and supplied ink from the main unit when the recording head is mounted to the main unit of the system, and which is freely exchangeable. Using a recording head of a united cartridge type, the invention will prove effective.

If a restoration means for a recording head and an auxiliary support means are included in the configuration of a recording unit of the invention, the effects of the invention will be further enhanced. Specifically, the combination of a capping means or a cleaning means for a recording head, a pressing or absorbing means, electric heat conversion elements, other heating elements, or an auxiliary heating means or a combination of the electric heat conversion elements and other heating elements, or an auxiliary discharge mode in which ink is discharged for other purpose except recording will contribute to more stable recording.

When it comes to the type of a recording head to be mounted and the number of recording heads, for instance, only one recording head may be installed for a single-color ink, or multiple recording heads may be provided in correspondence with multiple types of ink whose colors and densities are different.

As described above, since a heat fusing means for fusing ink is actuated with reception of a call signal, the time for raising the temperature of the heat fusing means before the start of printing can be ensured. Thus, a facsimile system or other image communication system which permits received images without ink stains can be provided. In this invention, a receiving operation of image data is started after it is confirmed that the temperature of the heat fusing means has reached a given fusing temperature. Therefore, the temperature of the heat fusing means has already risen to a sufficient temperature for fusing at the start of printing. This guarantees high-quality image recording without causing a fusing failure.

## Claims

1. An image communication system in which a recording head (20) ejects ink droplets to record an image on a recording medium in accordance with image data received by the communication system, comprising:
communications means (104,105) for enabling communication of image data and communication procedure signals with another party;
drive means for driving said recording head (20) to eject ink droplets onto the recording medium in accordance with image data received by said communication means (104,105); and
fusing means (47) for applying heat to fuse ink onto the recording medium,
said system further comprising control means (110) for initiating operation of said fusing means (47) when said communication means (104,105) receives a call signal (Ci) from another party, said communication means (104,105) being arranged to supply a response procedure signal (DIS,DCS) to the calling party during a period from initiation of the operation of said fusing means (47) to the time at which said fusing means reaches a predetermined temperature.

2. An image communication system according to claim 1, wherein said communication means (104,105) is arranged to send out a predetermined procedure signal (CFR) to the other party to the communication when the temperature of said fusing means (47) reaches the predetermined temperature within a predetermined time since initiation of the operation of said fusing means (47).

3. An image communication system according to claim 2, wherein said predetermined procedure signal (CFR) is a signal indicating that the system is ready to receive image data.

4. An image communication system according to any one of the preceding claims, wherein said communication means (104,105) stops communication with the other party when the temperature of said fusing means (47) does not reach the predetermined temperature within a predetermined time.

5. An image communication system according to claim 4, further comprising alarm means for supplying an alarm signal when said fusing means (47) is not operating correctly.

6. An image communication system according to any one of the preceding claims, further comprising conveying means (44,45) for conveying a recording medium to a recording position at which recording is carried out by said recording head (20), and additional conveying means (46) for conveying the recording medium from the recording position to said fusing means (47).

7. An image communication system according to any one of the preceding claims, wherein said recording head (20) has orifices from which ink droplets are ejected by using head energy to cause a change in the state of the ink.

8. An image communication system according to claim 7, wherein the change of state results from generation of bubbles due to boiling of the ink.

## Patentansprüche

1. Bildübertragungsvorrichtung, bei welcher ein Aufzeichnungskopf (20) Tintentröpfchen ausstößt, um ein Bild auf einem Aufzeichnungsmedium in Übereinstimmung mit durch die Übertragungsvorrichtung empfangenen Bilddaten aufzuzeichnen, mit
einer Übertragungseinrichtung (104, 105) zur Ermöglichung der Übertragung von Bilddaten und Übertragungsablaufsignalen zu einem anderen Anschlußinhaber,
einer Antriebseinrichtung zum Antrieb des Aufzeichnungskopfes (20), um Tintentröpfchen in Übereinstimmung mit durch die Übertragungseinrichtung (104, 105) empfangenen Bilddaten auf das Aufzeichnungsmedium auszustoßen, und
einer Schmelzeinrichtung (47) zur Aufbringung von Wärme, um die Tinte auf dem Aufzeichnungsmedium zu schmelzen,
wobei die Vorrichtung ferner eine Steuereinrichtung (110) aufweist, um den Betrieb der Schmelzeinrichtung (47) einzuleiten, wenn die Übertragungseinrichtung (104, 105) ein Rufsignal (Ci) von einem anderen Anschlußinhaber empfängt, wobei die Übertragungseinrichtung (104, 105) derart eingerichtet ist, daß dem rufenden Anschlußinhaber während einer Zeitdauer von der Einleitung des Betriebs der Schmelzeinrichtung (47) bis zu dem Zeitpunkt, zu welchem die Schmelzeinrichtung eine festgelegte Temperatur erreicht, ein Antwortablaufsignal (DIS, DCS) zugeführt wird.

2. Bildübertragungsvorrichtung gemäß Anspruch 1, wobei die Übertragungseinrichtung (104, 105) derart eingerichtet ist, daß sie ein festgelegtes Ablaufsignal (CFR) zu dem anderen Anschlußinhaber bei der Übertragung sendet, wenn die Temperatur der Schmelzeinrichtung (47) die festgelegte Temperatur innerhalb einer festgelegten Zeit ab der Einleitung des Betriebs der Schmelzeinrichtung (47) erreicht.

3. Bildübertragungsvorrichtung gemäß Anspruch 2, wobei das festgelegte Ablaufsignal (CFR) ein Signal ist, das anzeigt, daß die Vorrichtung zum Empfang von Bilddaten bereit ist.

4. Bildübertragungsvorrichtung gemäß einem der vorhergehenden Ansprüche, wobei die Übertragungseinrichtung (104, 105) die Übertragung zu dem anderen Anschlußinhaber stoppt, wenn die Temperatur der Schmelzeinrichtung (47) nicht innerhalb einer festgelegten Zeit die festgelegte Temperatur erreicht.

5. Bildübertragungsvorrichtung gemäß Anspruch 4, die ferner eine Alarmeinrichtung aufweist, um ein Alarmsignal zu schaffen, wenn die Schmelzeinrichtung (47) nicht korrekt arbeitet.

6. Bildübertragungsvorrichtung gemäß einem der vorhergehenden Ansprüche, die ferner eine Fördereinrichtung (44, 45) zur Förderung eines Aufzeichnungsmediums zu einer Aufzeichnungsposition, in welcher die Aufzeichnung mit Hilfe des Aufzeichnungskopfs (20) ausgeführt wird, und eine zusätzliche Fördereinrichtung (46) zur Förderung des Aufzeichnungsmediums von der Aufzeichnungsposition zu der Schmelzeinrichtung (47) aufweist.

7. Bildübertragungsvorrichtung gemäß einem der vorhergehenden Ansprüche, wobei der Aufzeichnungskopf (20) Öffnungen hat, aus welchen Tintentröpfchen unter Anwendung von Wärmeenergie, um eine Änderung im Zustand der Tinte zu bewirken, ausgestoßen werden.

8. Bildübertragungsvorrichtung gemäß Anspruch 7, wobei die Änderung des Zustands aus der Erzeugung von Blasen aufgrund des Siedens der Tinte resultiert.

## Revendications

1. Système de transmission d'images dans lequel une tête (20) d'enregistrement éjecte des gouttelettes d'encre pour enregistrer une image sur un support d'enregistrement conformément à des données d'image reçues par le système de transmission, comportant :
des moyens (104, 105) de transmission destinés à permettre la transmission de données d'image et de signaux de procédure de transmission avec une autre partie ;
des moyens d'attaque destinés à attaquer ladite tête (20) d'enregistrement pour éjecter des gouttelettes d'encre sur le support d'enregistrement en fonction de données d'image reçues par lesdits moyens de transmission (104, 105) ; et
des moyens de fusion (47) destinés à appliquer de la chaleur pour faire fondre l'encre sur le support d'enregistrement,
ledit système comportant en outre des moyens de commande (110) destinés à déclencher le fonctionnement desdits moyens de fusion (47) lorsque lesdits moyens de transmission (104, 105) reçoivent un signal d'appel (Ci) d'une autre partie, lesdits moyens de transmission (104, 105) étant agencés pour fournir un signal de procédure de réponse (DIS, DCS) à la partie appelante pendant une période allant du déclenchement du fonctionnement desdits moyens de fusion (47) jusqu'à l'instant où lesdits moyens de fusion atteignent une température prédéterminée.

2. Système de transmission d'images selon la revendication 1, dans lequel lesdits moyens de transmission (104, 105) sont agencés pour envoyer un signal de procédure prédéterminé (CFR) à l'autre partie pour la transmission lorsque la température desdits moyens de fusion (47) atteint la température prédéterminée en un temps prédéterminé à partir du déclenchement du fonctionnement desdits moyens de fusion (47).

3. Système de transmission d'images selon la revendication 2, dans lequel ledit signal de procédure prédéterminée (CFR) est un signal indiquant que le système est prêt à recevoir des données d'image.

4. Système de transmission d'images selon l'une quelconque des revendications précédentes, dans lequel lesdits moyens de transmission (104, 105) arrêtent la transmission avec l'autre partie lorsque la température desdits moyens de fusion (47) n'atteint pas la température prédéterminée en un temps prédéterminé.

5. Système de transmission d'images selon la revendication 4, comportant en outre des moyens d'alarme destinés à fournir un signal d'alarme lorsque lesdits moyens de fusion (47) ne fonctionnent pas correctement.

6. Système de transmission d'images selon l'une quelconque des revendications précédentes, comportant en outre des moyens de transport (44, 45) destinés à transporter un support d'enregistrement jusqu'à une position d'enregistrement dans laquelle un enregistrement est effectué par ladite tête (20) d'enregistrement, et d'autres moyens de transport (46) destinés à transporter le support d'enregistrement depuis la position d'enregistrement jusqu'auxdits moyens (47) de fusion.

7. Système de transmission d'images selon l'une quelconque des revendications précédentes, dans lequel ladite tête (20) d'enregistrement présente des orifices à partir desquels des gouttelettes d'encre sont éjectées par l'utilisation d'énergie thermique pour provoquer un changement d'état de l'encre.

8. Système de transmission d'images selon la revendication 7, dans lequel le changement d'état résulte de la génération de bulles dues à l'entrée en ébullition de l'encre.
